# NEUE EUROPÄISCHE PATENTSCHRIFT

(11) **EP 1 056 584 B2**
(45) Veröffentlichungstag und Bekanntmachung des Hinweises auf die Entscheidung über den Einspruch: **15.12.2010**
(45) Hinweis auf die Patenterteilung: 22.05.2002
(21) Anmeldenummer: 99906236.7
(22) Anmeldetag: 13.02.1999
(51) Int. Cl.: B29C 47/42, B29C 47/00, C09J 7/02

(54) **VERFAHREN ZUR KONTINUIERLICHEN, LÖSUNGDMITTEL-UND MASTIKATIONSFREIEN HERSTELLUNG VON DRUCKEMPFINDLICHEN SELBSTKLEBEMASSEN AUF BASIS VON NICHT-THERMOPLASTISCHEN ELASTOMEREN SOWIE DEREN BESCHICHTUNG ZUR HERSTELLUNG VON SELBSTKLEBENDEN ARTIKELN**
METHOD FOR CONTINOUS SOLVENT AND MASTICATION-FREE PRODUCTION OF PRESSURE-SENSITIVE SELF-ADHESIVE MATERIALS BASED ON NON-THERMOPLASTIC ELASTOMERS AND THEIR COATING FOR THE PRODUCTION OF SELF-ADHESIVE ARTICLES
PROCEDE POUR PRODUIRE EN CONTINU, SANS SOLVANT NI MASTICATION, DES MATIERES AUTOCOLLANTES, A BASE D'ELASTOMERES NON THERMOPLASTIQUES, ET LEUR APPLICATION POUR PRODUIRE DES ARTICLES AUTOCOLLANTS

(30) Priorität: 18.02.1998 DE 19806609
(43) Veröffentlichungstag der Anmeldung: 06.12.2000
(73) Patentinhaber: TESA SE, 20253 Hamburg (DE)
(72) Erfinder: BURMEISTER, Axel, D-22307 Hamburg (DE); HANSEN, Sven, D 22765 Hannover (DE); HENKE, Frank, D-21629 Neu Wulmstorf (DE); HIRSCH, Ralf, D-25451 Quickborn (DE); LEYDECKER, Heiko, D-23730 Neustadt (DE); MASSOW, Klaus, D-22391 Hamburg (DE); STÄHR, Jochen, D-30179 Hannover (DE)
(86) Internationale Anmeldenummer: PCT/EP1999/000968
(87) Internationale Veröffentlichungsnummer: WO 1999/042276

(56) Entgegenhaltungen:
- EP-A- 0 818 521
- EP-A- 0 874 034
- CA-A- 698 518
- DE-A- 2 303 366
- DE-A- 2 521 774
- DE-A- 2 719 095
- DE-A- 3 133 647
- GB-A- 2 274 429
- PATENT ABSTRACTS OF JAPAN vol. 098, no. 014, 31. Dezember 1998 & JP 10 259359 A (OJI PAPER CO LTD), 29. September 1998
- CHRIS RAUWNDAAL POLYMER EXTRUSION 1986, MUNICH VIENNA NEW YORK, Seiten 31 - 32
- ANGIER D.J. ET AL: 'Mastication of Rubber - VI. Viscosity and Molecular Weight Relationships for Natural Rubber alter Cold Mastication' JOUNAL OF POLYMER SCIENCE Bd. XXV, 1957, HERTS ENGLAND, Seiten 129 - 138

## Beschreibung

Die vorliegende Erfindung bezieht sich auf ein Verfahren zur kontinuierlichen, lösungsmittel- und mastikationsfreien Herstellung von druckempfindlichen Selbstklebemassen auf Basis nicht-thermoplastischer Elastomerer unter Verwendung von klebrigmachenden Harzen, typischen Kautschukweichmachern, gegebenenfalls Füllstoffen und thermisch aktivierbaren Vernetzern und ihrer Beschichtung zur Herstellung von selbstklebenden Artikeln, insbesondere hochleistungsfähiger selbstklebender Bänder.

Für das anwendungstechnische Anforderungsprofil von druckempfindlichen Klebersystemen und den damit hergestellten Haftklebeartikeln sind die zwei physikalischen Phänomene Adhäsion und Kohäsion der Haftkleberschichten von grundsätzlichem Inhalt. Die Adhäsion wird im technischen Sprachgebrauch unter den Begriffen Sofortklebkraft (Tack) und Klebkraft (Peelstrength) behandelt und beschreibt definitionsgemäß die Begriffe "selbstklebend", "Haftkleber" und/oder "druckempfindliche Klebebänder", d.h. die dauerhafte Verklebung unter "leichtem Andruck" ("Pressure Sensitive Adhesives").

Diese Eigenschaft wird insbesondere bei den Haftklebern auf Basis Naturkautschuk durch Einmischen von klebrigmachenden Harzen (Tackifier) und Weichmachern mit relativ niedrigen Molekulargewichten erzielt.

Die zweite definitionsgemäße Eigenschaft der Haftkleber ist ihre einfache rückstandsfreie Wiederablösbarkeit nach dem Gebrauch. Dieses Verhalten ist im wesentlichen bestimmt durch die hochmolekularen Kautschukanteile als Elastomerkomponente, die dem System als Kohäsion (innere Festigkeit) die geforderte Festigkeit bei Scherbeanspruchung verleihen, was insbesondere für den Einsatz der Produkte bei höheren Temperaturen und/oder mechanischer Belastungen Bedeutung erhält. Durch zusätzliche Vernetzung, zum Beispiel über ionisierende Strahlen, reaktive Harzkomponenten oder andere chemische Vernetzer, kann diese Eigenschaft verstärkt werden.

Die Leistungsfähigkeit des Haftklebers ist also im wesentlichen bestimmt durch das ausgewogene Verhältnis von Adhäsions- und Kohäsions-Eigenschaften und durch Verträglichkeit, Homogenität und Stabilität der Abmischung von Massebestandteilen mit extrem hohen und relativ niedrigen mittleren Molekulargewichten, was bei der Masseherstellung in branchenüblichen Misch- und Knetmaschinen unter Verwendung von Lösemitteln relativ einfach zu erreichen ist.

Die lösungsmittelfreie Compoundierung und Verarbeitung von Selbstklebemassen hat sich dagegen im wesentlichen nur für die Verarbeitung von schmelzenden, sogenannten thermoplastischen Elastomeren durchgesetzt.

Der Masseherstellprozeß wird dabei zumeist in Doppelschneckenextrudern bei höheren Temperaturen in der Schmelze durchgeführt, die Beschichtung erfolgt zumeist mittels Breitschlitzdüsen.

Der Vorteil der Verwendung thermoplastischer Elastomerer besteht im wesentlichen in der Vereinfachung des Streichprozesses. Der Verzicht auf brennbare Lösemittel macht die Trockneranlagen mit ihrem aufwendigen Energieaufwand für das Verdampfen und Rückgewinnen der Lösemittel und den Einsatz explosionsgeschützter Anlagen überflüssig. Hotmeltbeschichtungsanlagen sind kompakt und erlauben erheblich höhere Streichgeschwindigkeiten. Zudem handelt es sich um eine umweltfreundliche Technologie, bei der keine Lösemittelemissionen auftreten
Für die lösungsmittelfreie Compoundierung thermoplastischer Elastomerer werden gemäß dem Stande der Technik vorwiegend Blockcopolymeren mit Polystyrolblockanteilen verwendet. Der Vorteil dieser Substanzklasse besteht darin, daß die im Polymer befindlichen Polystyroldomänen oberhalb von 100 °C erweichen, wobei die Viskosität der Klebemasse stark abfällt und dadurch die leichte Verarbeitbarkeit gegeben ist. Nach Abkühlung auf Raumtemperatur bilden sich die Polystyroldomänen zurück und verleihen den auf thermoplastischen Elastomeren basierenden Haftklebern eine gewisse Scherfestigkeit.

Die thermoplastischen Elastomeren lassen sich mit klebkraftfördernden Kohlenwasserstoffharzen im Extruderprozeß einwandfrei compoundieren. Auf diese Weise läßt sich ein gewünschtes Klebkraftniveau relativ einfach erreichen. Die resultierenden Haftkleber bleiben jedoch empfindlich gegen Temperaturen oberhalb 40 °C. Kritisch ist dieses verbleibende "Kriechverhalten" für die auf dieser Basis hergestellten Selbstklebebänder für eine unbegrenzte Lagerstabilität (Verbiocken der Rollen im Stapel insbesondere beim Transport in wärmere Klimazonen) und für die Anwendung bei höheren Arbeitstemperaturen (zum Beispiel als Abdeckbänder in der Automobillackierung, wo derartige Bänder trotz Nachvernetzung ihre Funktionsfähigkeit verlieren, indem der Haftkleber erweicht und die Scherfestigkeit zum Fixieren der Abdeckmaskenpapiere nicht mehr gewährleistet ist).

Aus diesem Grunde haben sich die bekannten Schmelzhaftkleber auf der Basis von Blockcopolymeren fast ausschließlich für Verpackungsbänder und Etiketten für den Einsatz bei Raumtemperaturen durchsetzen können.

Mit nicht-thermoplastischen Elastomeren, wie zum Beispiel Naturkautschuk, lassen sich hingegen die geforderten Scherfestigkeiten erreichen, aber die lösungsmittelfreie Herstellung und Verarbeitung von Naturkautschuk-Haftklebern stellt den Fachmann bis heute vor nicht-gelöste Probleme.

Durch die extrem hochmolekularen Anteile des Kautschuks (mit M_{w} ≥ 1 Million) sind lösungsmittelfreie Selbstklebemassen mit der Schmelzhaftklebertechnologie unverarbeitbar oder aber die verwendeten Kautschuke müssen vor der Verarbeitung so stark in ihrem Molekulargewicht reduziert (abgebaut) werden, daß sie infolge dieses Abbaus ihre Eignung für leistungsfähige Selbstklebemassen einbüßen.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als "chemische Plastiziermittel" bekannt sind.
Der Mastikationsschritt ist in der Kautschuktechnologie nötig, um eine Erleichterung der Aufnahme der Zusatzstoffe zu erzielen.

Die Mastikation ist dabei streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).

Nichtgesteuerte Degradation stellt oft ein unerwünschtes Phänomen dar. Diese kann durch das Schaffen einer Schutzgasatmosphäre gering gehalten werden.

Verschiedene Wege zur lösungsmittelfreien Herstellung und Verarbeitung von Kautschuk-Haftklebern wurden beschrieben.

In dem Patent CA 698 518 wird ein Prozeß beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vernetzung nur eingeschränkt zu erreichen.

Die Verwendung von Polymerblends, wo neben nicht-thermoplastischem Naturkautschuk auch Blockcopolymere im Verhältnis von ca 1:1 eingesetzt werden, stellt im wesentlichen eine unbefriedigende Kompromißlösung dar, da weder hohe Scherfestigkeiten beim Einsatz der Selbstklebebänder bei höheren Temperaturen. noch deutliche Verbesserungen gegenüber der im Patent beschriebenen Eigenschaften ergibt.

JP 07 324 182 A2 beschreibt ein mehrstufiges Verfahren, in dem ein doppelseitigklebendes Band eine Haftkleberschicht auf Basis eines Acrylharzklebers und eine zweite Schicht aus einem Blend aus Isopren-Styrol-Elastomer, Naturkautschuk und nicht reaktivem Kohlenwasserstoffharz (Arkon P 100) aufweist. Dieses Band dient als Teppichverlegeband, wo ebenfalls keine erhöhten Anforderungen an die Scherfestigkeit bei höheren Temperaturen gestellt sind.

Der Einsatz von nicht-thermoplastischen Elastomeren wird ferner beschrieben in JP 07 331 197, wobei ein Isocyanat-reaktiver Naturkautschuk (Polyisopren gepfropft mit Maleinsäureester) mit einem mittleren Molekulargewicht unterhalb 1 Million mit aliphatischen, nichtreaktiven Kohlenwasserstoffharzen Verwendung findet, der mit blockierten Isocyanaten (zum Beispiel Desmodur CT) vemetzt wird, wobei die Mischung bei 150 °C fünf Minuten lang vorvernetzt wird und nach anschließendem Ausstreichen auf PET-Folie bei 180 °C mehrere Minuten (zum Beispiel 15 Minuten) lang ausgehärtet wird. Diese Verfahrensweise macht deutlich, wie aufwendig eine Nachvemetzung zu erreichen ist, wenn der Naturkautschuk einem zu starken Abbau während des Herstellprozesses unterworfen wird.

In der Patentanmeldung JP 07 278 509 wird ein Selbstklebeband geschützt, bei welchem der Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat-, Terpen-Harzen zu erhalten, die zwischen 140 °C und 200 °C und einer Streichviskosität von 10 bis 50 x 10³ cps gut verarbeitbar sind, die jedoch eine anschließende extrem hohe ESH-Dosis (40 Mrad) erfordern, um die für den Gebrauch notwendige Scherfestigkeit zu gewährleisten.
Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, wird auch in den Patenten WO 94 11 175, WO 95 25 774, WO 97 07 963 und entsprechend US 5,539,033, US 5,550,175 ausführlich dargestellt.
Hierbei werden die in der Haftklebertechnik gebräuchlichen Zusätze wie Tackifier-Harze, Weichmacher und Füllstoffe beschrieben.

Das jeweils offenbarte Herstellungsverfahren basiert auf einem Doppelschneckenextruder, der bei der gewählten Prozeßführung über Mastikation des Kautschuks und anschließender stufenweise Zugabe der einzelnen Zusätze mit einer entsprechenden Temperaturführung die Compoundierung zu einer homogenen Haftkleberabmischung ermöglicht.

Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit der fertig abgemischten Masse ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlenvernetzung (ESH) unumgänglich, ebenso wie den Einsatz von reaktiven Substanzen als ESH-Promotoren zum Erzielen einer effektiven Vernetzungsausbeute.

Beide Verfahrensschritte sind in den genannten Patenten beschrieben, die gewählten ESH-Promotoren neigen aber auch zu unerwünschten chemischen Vernetzungsreaktionen unter erhöhten Temperaturen, dies limitiert den Einsatz bestimmter klebrigmachender Harze.

Aufgrund der unvermeidbaren hohen Produkttemperaturen verbietet eine Compoundierung im Doppelschneckenextruder den Einsatz thermisch aktivierbarer Substanzen, die zur Vernetzung der Klebmassen geeignet sind, wie zum Beispiel reaktiver (optional halogenierter) Phenolharze, Schwefel- oder Schwefelabspaltender Vernetzersysteme. weil es wegen der im Prozeß einsetzenden chemischen Vernetzungsreaktionen zu so erheblicher Viskositätserhöhung kommt, daß die resultierende Haftklebemasse ihre Streichfähigkeit einbüßt.

Zusammenfassend kann festgestellt werden, daß alle bekannten Verfahren sich durch extrem starken Kautschukabbau auszeichnen. Dieser erfordert bei der Weiterverarbeitung der Massen zu Selbstklebebändern extreme Vernetzungsbedingungen und hat außerdem ein teilweise eingeschränktes Anwendungsprofil, insbesondere für den Einsatz resultierender Selbstklebebänder bei höheren Temperaturen, zur Folge.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen läßt, sowie der geringen Verweilzeit und des engen Verweilzeitspektrums hat sich ihr Einsatzgebiet in letzter Zeit u.a. auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil. Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.
Die Materialien werden zwischen Zentral- und Planetenspindeln beziehungsweise zwischen Planetenspindeln und Schrägverzahnung des Walzenteils umgewälzt, so daß unter Einfluß von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepaßt werden. Die Spindelanzahl beeinflußt das freie Volumen innerhalb des Planetwalzenextruders, die Verweilzeit des Materials im Prozeß und bestimmt zudem die Flächengröße für den Wärme- und Materialaustausch. Die Anzahl der Planetenspindeln hat über die eingeleitete Scherenergie Einfluß auf das Compoundierergebnis. Bei konstantem Walzenzylinderdurchmesser läßt sich mit größerer Spindelanzahl eine bessere Homogenisierund Dispergierleistung beziehungsweise ein größerer Produktdurchsatz erzielen.

Die maximale Anzahl an Planetenspindeln, die sich zwischen Zentralspindel und Walzenzylinder einbauen läßt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

In diesem Zusammenhang wird auf die Patentanmeldungen beziehungsweise das Gebrauchsmuster DE 196 31 182, DE 94 21 955, DE 195 34 813, DE 195 18 255, DE 44 33 487 verwiesen, die eine Übersicht zum Stande der Technik auf dem Gebiete der Planetwalzenextruder darstellen.

So wird darüber hinaus in DE 39 08 415 A1 die Verarbeitung von Gummimischungen beziehungsweise gummiähnlichen Mischungen mittels Planetwalzenextruder beschrieben. Vorbatche oder Fertigmischungen werden zum Zwecke einer Weiterverarbeitung auf Folgeeinrichtungen auf einem Planetwalzenextruder mastiziert und plastifiziert. Ebenfalls ist die Herstellung von Fertigmischungen im Planetwalzenextruder beschrieben: Hierbei werden zu den Gummivormischungen Vulkanisationssysteme und andere Komponenten zudosiert.

Aufgabe der vorliegenden Erfindung war es, ein Verfahren zur Verfügung zu stellen, mit dem sich, gegebenenfalls unter Verwendung von thermisch reaktiven Komponenten, druckempfindliche Selbstklebemassen auf der Basis nicht-thermoplastischer Elastomere lösemittelfrei kontinuierlich herstellen und gegebenenfalls inline beschichten lassen, ohne daß der Kautschuk eigenschaftsschädigend mastiziert werden muß.

Gelöst wird diese Aufgabe durch ein Verfahren, wie es im Hauptanspruch dargelegt ist. Gegenstand der Unteransprüche sind dabei vorteilhafte Weiterbildungen des Verfahrens.

Demgemäß betrifft die Erfindung ein Verfahren gemäß Anspruch 1.

Erfindungsgemäß wird ein Planetwalzenextruders als kontinuierlich arbeitendes Aggregat verwendet wobei dessen Compoundierteil vorzugsweise zumindest aus zwei, besonders bevorzugt aber aus drei gekoppelten Walzenzylindern besteht, wobei jeder Walzenzylinder einen oder mehrere separate Temperierkreise aufweisen kann.

Im Unterschied zu sonst üblichen Herstellungsverfahren erfolgt im Planetwalzenextruder gemäß dem Verfahren vorliegender Erfindung keine eigenschaftsschädigende Mastikation der nicht-thermoplastischen Elastomeren, da diese hier nicht separat dem Einfluß hoher Scherenergie unterworfen werden, sondern stets zusammen mit einer oder mehreren flüssigen Komponenten verarbeitet werden. Diese Flüssigkomponenten können sowohl Weichmacher wie zum Beispiel Öle sein, aber auch Harze, die erst während des Compoundierprozesses bei Einwirken von Scherenergie und/oder äußerer Temperierung aufschmelzen. Durch die Anwesenheit dieser Flüssigkomponenten wird das Ausmaß an Friktionsenergie derartig limitiert, daß die Mastikation des Kautschuks, d.h. der Molekulargewichtsabbau der Elastomeren, sowie hohe resultierende Compoundierungstemperaturen vermieden werden können.

Zudem weisen Planetwalzenextruder außerordentlich große Flächen auf, an denen es zum Materialabtausch und Oberflächenerneuerung kommt, mit der die über Friktion eingebrachte Scherenergie schnell abgeführt werden kann und auf diese Weise unerwünscht hohe Produkttemperaturen vermieden werden.

Der Füllteil des Walzenzylinders besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Die Anzahl der Planetenspindeln hat, wie bereits ausgeführt, über die eingeleitete Scherenergie Einfluß auf das Compoundierergebnis: Bei konstantem Waizenzylinderdurchmesser läßt sich mit größerer Spindelanzahl eine bessere Homogenisierund Dispergierleistung beziehungsweise ein größerer Produktdurchsatz erzielen. Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen.

Für das erfindungsgemäße Verfahren ist es vorteilhaft, einen Planetwalzenextruder zu verwenden, dessen Compoundierteil durch Zusammenschalten von mindestens zwei Walzenzylindern verlängert ist. Zum einen ist dadurch trotz Anwesenheit friktionsreduzierender Komponenten zur Vermeidung der Kautschukmastikation ein vollständiges Aufschließen der Elastomerkomponenten sowie die gewünschte Homogenisier- und Dispergierleistung bei wirtschaftlichen Durchsatzraten möglich; zum anderen ermöglicht das Zusammenschalten vorzugsweise separat temperierter Walzenzylinder eine ausgewogene Temperaturführung des Prozesses, die die Verwendung von thermisch aktivierbaren Vernetzersystemen erlaubt.

Während im vorderen Compoundierteil des Planetwalzenextruders die Walzenzylinder vorteilhafterweise mit Temperaturen oberhalb des Schmelzpunkts der verwendeten Harze beheizt werden, wird der hintere Compoundierteil vorteilhafterweise zum Absenken der Produkttemperatur gekühlt. Dadurch wird die Verweilzeit der Selbstklebemasse bei höheren Temperaturen möglichst kurz gehalten, so daß eine Aktivierung der in der Selbstklebemasse enthaltenen thermischen Vernetzersysteme vermieden wird.

Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepaßt sein.

Zwischen zwei zusammengeschalteten Walzenzylindern befindet sich im allgemeinen ein Anlaufring, durch dessen freien Querschnitt die Zentralspindel führt und der die Planetenspindeln eines Walzenzylinders ortsfest hält. Anlaufringe können verschiedene freie Querschnitte aufweisen, womit der Rückstau des Produkts und damit der Füllgrad beziehungsweise das Ausmaß an Scherenergie variiert und an die Prozeßanforderungen angepaßt werden kann. Zusätzlich können die Anlaufringe mit radialen Bohrungen versehen sein, über die Flüssigkeiten wie zum Beispiel Weichmacheröle oder auch Schutzgase wie Stickstoff, Argon, Kohlendioxid o.ä. dem Compoundierteil des Planetwalzenextruders zugeführt werden können.

Die Zentralspindel sowie jeder Walzenzylinder sollte vorzugsweise über einen oder mehrere separate Temperier- beziehungsweise Kühlkreise verfügen, um ein Temperaturregime zu ermöglichen, das den Einsatz thermisch aktivierbarer Vernetzungssysteme erlaubt. In Fällen, wo dies nicht erforderlich ist, können die Temperierkreise zusammengeschalteter Walzenzylinder auch miteinander verbunden werden, um die Anzahl an Temperiergeräten möglichst gering zu halten.

Im Sinne der Erfindung sollten der Füllteil des Planetwalzenextruders und die Zentralspindel vorzugsweise nicht beheizt, sondern gekühlt werden, um ein Anbacken von Material auf der Füllschnecke zu vermeiden sowie einen effektiven Wärmeaustausch mit der Klebemasse zu gewährleisten.

Im Verfahren gemäß vorliegender Erfindung werden alle Feststoffkomponenten wie Elastomere, Füll- und Zuschlagstoffe, Harze, Alterungsschutzmittel usw. gemeinsam in den Einfüllbereich des Planetwalzenextruders eindosiert. Dabei können diese Stoffe sowohl als jeweils separate Komponenten, wie auch als gemeinsamer Premix oder auch als Teilvormischungen dem Compoundieraggregat zugegeben werden. Die Dosierung der Komponenten als Premix eignet sich besonders, wenn die Komponenten ähnliche Darreichungsformen beziehungsweise ähnliche Schüttdichten aufweisen, so daß sich auf diese Weise die Anzahl der Dosiersysteme gering halten läßt. Premixe lassen sich auf einfache Weise zum Beispiel in Pulvermischern herstellen. Zur Dosierung der einzelnen Festkomponenten eignen sich volumetrisch und gravimetrisch arbeitende Dosiersysteme in gängigen Ausführungen. Auch besteht die Möglichkeit, die Flüssigkomponenten oder auch nur Teile hiervon, wie zum Beispiel Weichmacheröl. einem Premix zuzugeben.

Die zudosierten Materialien werden von der Schnecke des Füllteils in den ersten Wafzenzyfinder des Planetwatzenextruders transportiert. Zwischen jedem Walzenzylinder können über Bohrungen in den Anlaufringen flüssige Komponenten wie zum Beispiel Weichmacheröle, Weichharze oder Harzschmelzen zugegeben werden. Über die Menge an Flüssigkeit, die bereits vor Einfluß an Scherenergie zugegeben wird, lassen sich sowohl Abbaugrad der Elastomere wie auch Compoundierungstemperatur der druckempfindlichen Klebemasse beeinflussen. Beispielsweise wird ein besonders geringer Molekulargewichtsabbau der Elastomeren erhalten, wenn ein flüssiger Weichmacher bereits dann zugegeben wird, wenn noch keinerlei Einfluß von Friktionsenergie erfolgte, also dieser entweder einem Feststoffpremix zugegeben wird, oder das Weichmacheröl zwischen Füllschnecke und erstem Walzenzylinder kontinuierlich zudosiert wird. Auch ein Aufteilen der Flüssigkomponenten als sogenannter split-feed über die Verfahrenslänge ist möglich und ist ein weiterer Parameter zur Steuerung des Prozesses hinsichtlich Elastomerabbau und Produkttemperatur.

Das erfindungsgemäße Verfahren erlaubt die Herstellung von hochleistungsfähigen Selbstklebemassen und insbesondere im Verbund mit einer nachgeschalteten Beschichtungs- und Vernetzungseinheit die Herstellung von hochleistungsfähigen Selbstklebebändern unter Erlangung besonderer Kostenvorteile.

Es besteht im wesentlichen aus den bereits dargelegten Verfahrensschritten, welche optional unter einer Schutzgasatmosphäre zur Vermeidung von oxidativem Polymerabbau durchgeführt werden können.

Im ersten Verfahrensschritt wird eine Masse aus den Elastomeren und den für die Herstellung von selbstklebenden Massen benötigten bekannten Zuschlagstoffen wie Füllstoffe, Alterungsschutzmittel, Weichmacher und Klebharze in einem Planetwalzenextruder lösungsmittelfrei hergestellt, wobei die Masse eine Endtemperatur von weniger als 150°C, bevorzugt weniger als 130 °C, ganz besonders bevorzugt zwischen 70 °C und 110 °C aufweist. Die Gesamtverweilzeit der Masse im Planetwalzenextruder sollte nicht einen Wert von drei Minuten überschreiten. Die resultierende Hotmelt-Klebmasse weist eine Viskosität zwischen 300 und 1500 Pa*s, insbesondere eine Viskosität zwischen 800 und 1200 Pa*s bei 130 °C und einem Schergefälle von 100 rad/s auf.

Im zweiten, vorteilhafterweise im Verbund mit dem Compoundierschritt im Planetwalzenextruder erfolgenden Verfahrensschritt wird die erfindungsgemäß hergestellte, druckempfindliche Hotmelt-Klebemasse mit einem Auftragswerk auf einen bahnförmigen Träger lösemittelfrei beschichtet.

Je nach Viskosität der Selbstklebemasse eignen sich verschiedene Verfahren zur Beschichtung der bahnförmigen Materialien.

Gemäß dem Verfahren der vorliegenden Erfindung erfolgt die Entgasung unter Einfluß von Vakuum vorzugsweise in Schneckenmaschinen, die zugleich die Druckverluste der Rohrleitungen und Beschichtungsdüse überwinden können. Hierfür werden Einschneckenextruder besonders bevorzugt, die zudem über eine Druckregelung verfügen, so daß die Beschichtung der bahnförmigen Trägermaterialien mit Masseaufträgen sehr geringer Schwankungsbreite erfolgen kann.

Die Beschichtung erfolgt unter der bahnförmigen Trägermaterialien mit der nach erfindungsgemäßen Verfahren hergestellten Selbstklebemasse Verwendung von Walzenbeschichtungsauftragswerken oder Mehrwalzen-Beschichtungskalandern, die aus vorzugsweise drei, besonders bevorzugt aus vier Beschichtungswalzen bestehen, wobei die Selbstklebemasse bei Durchgang durch einen oder mehrere Walzenspalte vor Übergabe auf das bahnförmige Material auf die gewünschte Dicke geformt wird. Dieses Beschichtungsverfahren wird besonders dann bevorzugt, wenn die Viskositäten der Selbstklebemasse Werte von 5000 Pa*s bei einem Schergefälle von 1 rad/s übersteigt, da dann eine Beschichtung mit Extrusionsdüsen nicht mehr die erforderte Genauigkeit im Masseauftrag liefert.

Je nach Art des zu beschichtenden bahnförmigen Trägermaterials kann die Beschichtung im Gleichlauf- oder Gegenlaufverfahren erfolgen.

Die Beschichtung ist auf Walzenbeschichtungsauftragswerken oder Mehrwalzen-Beschichtungskalandern bei Temperaturen unterhalb von 100 °C möglich, so daß auch Selbstklebemassen beschichtet werden können, die thermisch aktivierbare Vernetzer enthalten. Zum Zwecke erhöhter Gasblasenfreiheit der beschichteten Klebmasse kann zwischen Planetwalzenextruder und Auftragswerk eine Vakuumentgasung, zum Beispiel eine Vakuumkammer, ein Entgasungsextruder oder ähnliches installiert sein.

Vorteilhafterweise im Verbund mit Masseherstellung und Beschichtung erfolgt in einem dritten Verfahrensschritt die Vernetzung der Selbstklebemasse auf dem Träger durch ionisierende Strahlung, wie zum Beispiel Elektronenstrahlen, so daß das resultierende Selbstklebeband scherfest und temperaturstabil wird. Auch UV-Strahlen können für die Vernetzung eingesetzt werden, hierbei müssen der Selbstklebemasse entsprechende UV-Promotoren zugesetzt werden.

Für eine darüber hinaus verbesserte Leistungsfähigkeit oder im Falle ESH-sensibler Träger kann die Vernetzung auch durch thermisch aktivierbare Vernetzer unter Temperatureinwirkung erfolgen.

Die hierzu notwendige Erwärmung der druckempfindlichen Hotmelt-Klebemasse kann mit Hilfe der vorbekannten Techniken erfolgen, insbesondere mit Hilfe von Hochtemperatur-Kanälen, aber auch mit Hilfe von Infrarot-Strahlern oder mittels hochfrequenter magnetischer Wechselfelder, beispielsweise HF- UHF- oder Mikrowellen.

Die Vernetzung der druckempfindlichen Hotmelt-Klebemasse kann weiterhin mittels einer Kombination von ionisierender Strahlung und thermisch aktivierbaren chemischen Vernetzern durchgeführt werden.

Es resultiert eine sehr scherfeste druckempfindliche Selbstklebemasse, die in ihren Eigenschaften gleichartigen, im Lösemittelverfahren hergestellten Selbstklebemassen vergleichbar ist.

Mit dem erfindungsgemäßen Verfahren sind fast ausnahmslos alle vorbekannten und in der Literatur beschriebenen Komponenten von kautschukbasierenden Selbstklebemassen lösemittelfrei verarbeitbar.

Vorteilhafterweise ist das nicht-thermoplastische Elastomer gewählt aus der Gruppe der Naturkautschuke oder der Synthesekautschuke oder es besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der haiogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den nicht-thermoplastischen Elastomeren zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-lsopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze. die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen Auf die Darstellung des Wissensstandes im "Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind bei dem erfindungsgemäßen Verfahren alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vemetzer kann auch durch IR-Strahlen oder hochenergetische Wechselfelder erfolgen.

Des weiteren kann unter Zuhilfenahme der druckempfindlichen Haftschmelzklebemasse ein Selbstklebeband hergestellt werden indem auf ein bahnförmiges Material zumindest einseitig die Selbstklebemasse aufgetragen wird.

Als bahnförmige Trägermaterialien für die erfindungsgemäß hergestellten und verarbeiteten Selbstklebemassen sind je nach Verwendungszweck des Klebebandes alle bekannten Träger, gegebenenfalls mit entsprechender chemischer oder physikalischer Oberflächenvorbehandlung der Streichseite sowie antiadhesiver physikalischer Behandlung oder Beschichtung der Rückseite geeignet. Genannt seien beispielsweise gekreppte und ungekreppte Papiere. Polyethylen-. Polypropylenmono- oder biaxial orientierte Polypropylenfolien, Polyester-, PVC- und andere Folien, bahnförmige Schaumstoffe, beispielsweise aus Polyethylen und Polyurethan, Gewebe, Gewirke und Vliese.
Schließlich kann das bahnförmige Material ein beidseitig antiadhäsiv beschichtetes Material sein wie Trennpapiere oder Trennfolien.
Die Dicke der Selbstklebemasse auf dem bahnförmigen Material kann zwischen 10 µm und 2000 µm betragen, vorzugsweise zwischen 15 µm und 150 µm.

Schließlich kann auf einem Trennpapier die Selbstklebemasse in einer Dicke von 800 um bis 1200 µm aufgetragen sein. Eine derartige Klebmassenschicht ist, insbesondere nach Vernetzung, als trägerloses doppelseitiges Selbstklebeband vielseitig anwendbar.

Aufgrund des hohen Molekulargewichts der nichtmastizierten Elastomere besteht mit dem erfindungsgemäßen Verfahren erstmalig die Möglichkeit, entweder vollständig auf eine Vernetzung der druckempfindlichen Klebemasse verzichten zu können oder aber eine effektive Vernetzung, die zum Beispiel Hochtemperaturanwendungen der nach diesem Verfahren hergestellten Klebebänder erlaubt, über energiereiche Strahlung durchführen zu können, ohne daß dafür Promotoren erforderlich sind. Weiterhin ist durch die Temperaturführung auf niedrigem Niveau jetzt auch erstmalig die Verwendung von thermisch aktivierbaren Vernetzern bei der Herstellung von lösungsmittelfreien Selbstklebemassen auf der Basis nicht-thermoplastischer Elastomere möglich.

Die nach dem erfindungsgemäßen Verfahren hergestellten Selbstklebemassen sind hoch scherfest. Die eingesetzten Kautschuke werden nicht einer Mastikation unterworfen, allerdings treten in den einzelnen Verfahrensschritten Degradationsprozesse auf, die die Eigenschaften der Selbstklebemasse aber nicht nachhaltig verschlechtern. Darüber hinaus sind diese Prozesse durch da erfindungsgemäß Verfahren eingeschränkt und beherrschbar.

Anhand der folgenden Beispiele soll die Erfindung näher beschrieben werden, ohne damit die Erfindung einschränken zu wollen.

### Die eingesetzten Prüfmethoden sind im folgenden kurz charakterisiert:

Die Klebkraft (Schälfestigkeit) der Massen wurde nach AFERA 4001 bestimmt.

Die Scherfestigkeit der untersuchten Klebmassen wurde nach PSTC 7 (Holding Power) bestimmt. Alle angegebenen Werte wurden bei Raumtemperatur und den angegebenen Belastungen von 10 oder 20 N, mit einer Verklebungsfläche von 20×13 mm² bestimmt. Die Ergebnisse sind in Minuten Haltezeit angegeben.

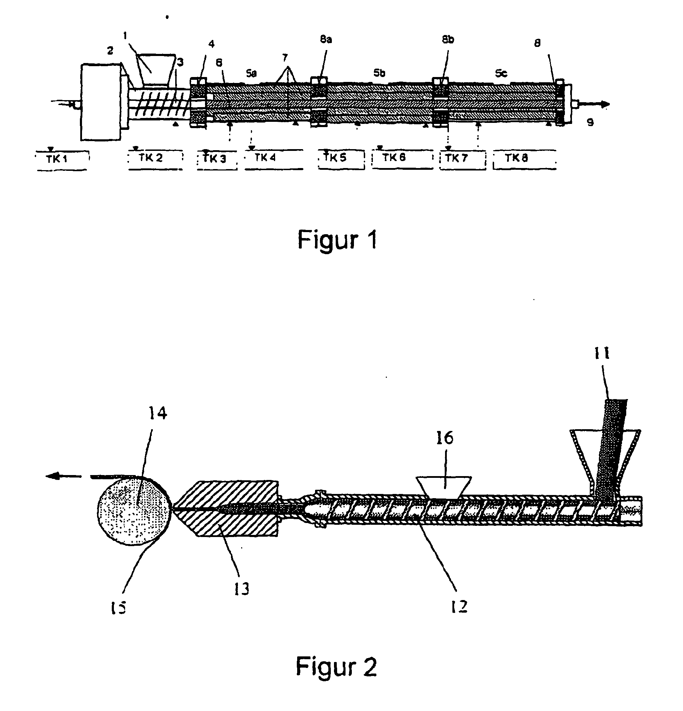

In den Beispielen wurde ein Planetwalzenextruder der Firma ENTEX Rust&Mitschke verwendet. Der Durchmesser eines Walzenzylinders betrug 70 mm, seine Verfahrenslänge ist zwischen 400 mm und 1200 mm variiert worden.
Eine der Planetwalzenextruder-Konfigurationen, wie sie in den nachfolgenden Beispielen verwendet wurde, zeigt Figur 1.

Der Planetwalzenextruder hat einen Füllteil (2) und einen Compoundierteil (5), der aus drei hintereinander geschalteten Walzenzylindern (5a-5c) bestand. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung des Walzenzylinders (5a-5c) ab. Die Drehzahl der Zentralspindel (6) konnte stufenlos bis 110 Umdrehungen pro Minute eingestellt werden.

Am Ende jedes Walzenzylinders (5a-5c) befindet sich ein Anlaufring (8), der die Planetenspindeln (7) ortsfest hält.

Über die Füllöffnung (1) wurden alle Feststoffkomponenten der lösungsmittelfreien Selbstklebemasse wie Elastomere, Harze, Füllstoffe, Antioxidantien usw. auf die Förderschnecke (3) des Füllteils (2) des Planetwalzenextruders dosiert. Die Förderschnecke (3) übergibt die Materialien danach auf die Zentralspindel (6) des ersten Walzenzylinders (5a). Zur Verbesserung des Materialeinzugs zwischen Zentralspindel (6) und Planetenspindeln (7) wurden im ersten Walzenzylinder (5a) sechs Planetenspindeln (7) mit alternierend unterschiedlichen Längen verwendet.

Die innen hohle Förderschnecke (3) und Zentralspindel (6) sind kraftschlüssig miteinander verbunden und besitzen einen gemeinsamen Temperierkreis. Jeder Walzenzylinder (5a-5c) des Compoundierteils (5) verfügte über zwei separate Temperierkreise. Über einen weiteren Temperierkreis wurde das Füllteil (2) gekühlt. Als Temperiermedium wurde Druckwasser verwendet, die Kühlung erfolgte mit Kühlwasser von 15 °C bis 18 °C.

Die separate Dosierung von Flüssigkeiten wie Weichmacheröl beziehungsweise Vernetzer erfolgte über den Einspritzring (4) vorm ersten Walzenzylinder (5a) beziehungsweise über die mit Bohrungen versehenen Anlaufringe (8a, 8b) oder in Kombination beider Möglichkeiten.

Die Temperatur der Selbstklebemasse wurde mittels Einstechfühler im Produktaustritt (9) ermittelt.

Weiterhin soll das erfindungsgemäße Verfahren mittels weiterer Figuren näher erläutert werden, ohne damit die Erfindung unnötig einschränken zu wollen. Es zeigen
- Figur 2: den Weg des Selbstklebemasse aus dem vorgeschalteten Planetwalzenextruder bis zur Beschichtung auf ein Trägermaterial und
- Figur 3: eine Übersicht über das gesamte Verfahren in einer besonders vorteilhaften Ausführungsform.

Gemäß Figur 2 kommt der Strang (11) der Selbstklebemasse aus dem vorgeschalteten Planetwalzenextruder, in einen Förderextruder (12). In diesem wird die Selbstklebemasse über eine Öffnung (16) mit Hilfe von Vakuum von Luft befreit und ineine Beschichtungsdüse mit einen Kleiderbügelverteilkanal (13) gefördert, mit der die Selbstklebemasse auf das über eine Kühlwalze (14) laufende Trägermaterial (15) aufgetragen wird.

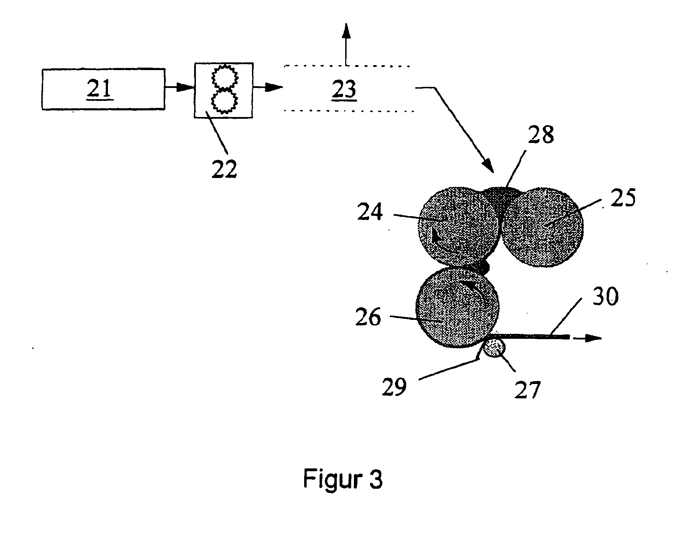

Die Figur 3 bietet schließlich eine Übersicht über das gesamte Verfahren in einer besonders vorteilhaften Ausführungsform. Im ersten Verfahrensschritt erfolgt dabei die Compoundierung der Selbstklebemasse (28) in einem Planetwalzenextruder (21). Die fertige Selbstklebemasse (28) wird in eine Schmelzepumpe (22) gefördert, die die Selbstklebemasse (28) in ein Walzenauftragswerk überführt.

Nach Compoundierung unter Schutzgasatmosphäre befindet sich zum Zwecke des Erzielens einer luftblasenfreier Selbstklebemasse (28) zwischen Schmelzepumpe (22) und Walzenauftragswerk ein Entgasungsextruder (23).

Das Walzenauftragswerk wird gebildet von einer Dosierwalze (24), einer Rakelwalze (25), die die Dicke der Selbstklebeschicht (28) auf dem Trägermaterial (29) bestimmt und einer Übertragungswalze (26). Auf einer Auflegewalze (27) werden schließlich die Selbstklebemasse (28) und das Trägermaterial (29) zusammengeführt und bilden somit ein Laminat (30).

### Beispiele

### Vergleichsbeispiele 1 bis 3

Die Effizienz eines Planetwalzenextruders hinsichtlich des erzielbaren Durchsatzes bei Verwendung von mehreren hintereinander geschalteten Walzenzylindern für das erfindungsgemäße Verfahren der lösungsmittelfreien Herstellung von Selbstklebemassen auf Basis nicht-thermoplastischer Elastomeren zeigen Vergleichsbeispiele 1 bis 3. Verwendet wurde ein Planetwalzenextruder wie in Figur 1 prinzipiell beschrieben. Mit gleicher Rezeptur und unter sonst konstanten Bedingungen wurde der Planetwalzenextruder jeweils mit ein, zwei oder drei Walzenzylindern betrieben, wobei jeder Walzenzylinder mit 6 Planetenspindeln bestückt war und zwischen jedem Walzenzylinder ein Anlaufring mit einem freien Querschnitt von 44 mm verwendet wurde. Die Drehzahl der Zentralspindel wurde auf 100 Umdrehungen/min eingestellt. Es wurde die maximale Produktrate (Qₘₐₓ) für jede Planetwalzenextruder-Konfiguration ermittelt, bis zu der ein homogener Compound erhalten wurde.

in den Beispielen 1 bis 3 wurde die Rezeptur A verwendet. In diesem und allen folgenden Beispielen wurden die nicht-thermoplastischen Elastomeren in Granulatform mit mittleren Teilchengrößen von 8 mm verwendet. Um das Granulat dosierfähig zu halten, wurde es talkumiert. Zur Granulatherstellung wurde eine Schneidmühle der Fa. Pallmann verwendet.

| Beispielrezeptur A | | |
|---|---|---|
| A | Komponente | Gewichtsanteil [phr] |
| | NR Air Dried Sheets | 100 |
| | Zinkoxid, aktiv | 11,4 |
| | Escorez 1202 ® | 43,6 |
| | Dercolyte S115 ® | 20 |
| | Resin 731 D ® | 50,9 |
| | Ondina G 33 ® | 8 |
| | Lowinox AH 25 ® | 2,5 |
| | Summe | 236,4 |

Aus sämtlichen Rezepturkomponenten wurde in einem 50-kg-Pulvermischer ein Premix hergestellt, der über einen volumetrisch arbeitenden Dosier in den Füllteil des Planetwalzenextruders dosiert wurde. Die Temperierkreise für die Zentralspindel und das Füllteil (TK1 und TK2) waren wassergekühlt, jedes Walzenteil wurde mit 100 °C beheizt. Die Tabelle zeigt in Abhängigkeit der Anzahl an Walzenzylindern die maximal erzielten Produktraten.

| Vergleichsbeispiel | Anzahl Walzenzylinder | Qₘₐₓ [kg/h] |
|---|---|---|
| 1 | 1 | 45 |
| 2 | 2 | 62 |
| 3 | 3 | 83 |

### Beispiel 4

Zur Herstellung von Masking tapes auf Papierträgerbasis diente die Rezeptur A aus den Beispielen 1-3. Die Masse wurde analog Beispiel 3 im Planetwalzenextruder hergestellt. Die Masseaustrittstemperatur betrug 112 °C.
Die so erhaltene Klebmasse wurde unmittelbar nach dem Herstellprozeßauf einen schwachgekreppten, nach branchenüblichen Verfahren imprägnierten, mit bekannten Release- und Primerschicht ausgerüsteten Papierträger, welcher ein Flächengewicht von 68 g/m² aufweist, mit einer Schichtdicke von 40 µm aufgebracht.
Die Beschichtung der Klebemasse erfolgte mit Hilfe eines 4-Walzenkalanderauftragswerkes der Fa. Farrel in einer Arbeitsbreite von 1200 mm mit Massezuführung durch einen Einschneckenförderextruder. Die Beschichtung erfolgte im Gleichlauf. d.h. mit Hilfe einer bahnführenden Anlegewalze (Gummi) wurde von der dritten auftragsbestimmenden Kalanderwalze der Klebstoffauftrag auf das gekreppte Papier übertragen.

Der aus einem Förderextruder austretende Klebstoff wurde mit Hilfe eines Förderbandes changierend in den oberen Walzenspalt des Kalanders gefördert. Durch den eingestellten Spalt zwischen den beiden oberen Walzen des Kalanders wird eine Massevordosierung erreicht, die einen etwa 2 bis 3 cm dicken Klebstoff-Film erzeugt. Dieser vorgeformte Massefilm wird durch die dritte Walze abgenommen und durch den zur dritte Walze eingestellten Spalt auf den gewünschten Masseauftrag ausgeformt. Die dritte Walze übergibt mit Bahngeschwindigkeit im Gleichlauf an das über eine Anlegewalze geführte Substrat.

Zwischen den Walzen wurde eine Differenzgeschwindigkeit eingestellt im Verhältnis 6:1. Alle Walzen waren auf 113 °C temperiert. Die Beschichtungsgeschwindigkeit betrug 150 m/min.

Das so erhaltene Klebeband weist eine Klebkraft von 3,5 N/cm, Scherstandzeiten (10N) von > 1000 min, und eine Eignung als Abdeckband mit kurzzeitiger Temperaturbelastbarkeit bis zu 80 °C auf.

Die auf dem so erhaltenen Klebeband aufgebrachte Klebmasse wurde nach der Beschichtung durch Elektronenstrahlen vernetzt. Die Bestrahlung wurde an einem Scanning-Beschleuniger der Fa. POLYMER PHYSIK Tübingen bei einer Beschleunigungsspannung von 175 kV und einer Strahlendosis von 20 kGy durchgeführt.

Bei unveränderter Klebkraft erhöhten sich die nach gleicher Weise gemessenen Scherstandzeiten (10N) auf > 5000 min, und das resultierende Band wies eine Eignung als Abdeckband mit kurzzeitiger Temperaturbelastbarkeit bis zu 120 °C auf.

### Beispiel 5

Zur Herstellung eines Hochtemperatur-Masking tapes auf Papierträgerbasis diente die folgende Beispielrezeptur B.

| Beispielrezeptur B | | |
|---|---|---|
| B | Komponente | Gewichtsanteil [phr] |
| | NR Air Dried Sheets | 100 |
| | Zinkoxid, aktiv | 11,4 |
| | Stearinsäure | 1,1 |
| | Escorez 1202 ® | 20 |
| | Dercolyte S115 ® | 43,6 |
| | Resin 731 D ® | 50,9 |
| | Ondina G 33 ® | 8 |
| | Lowinox AH 25 ® | 2,5 |
| | Rhenogran S 80 ® | 3,1 |
| | Rhenogran ZEPC 80 ® | 4,4 |
| | Rhenocure HX ® | 0,5 |
| | Summe | 245.5 |

Die Masseherstellung erfolgte in einem Planetwalzenextruder gemäß Figur 1 mit drei Walzenzylindern. Der erste Walzenzylinder wurde mit sechs, der zweite und dritte Waizenzylinder jeweils mit sieben Planetenspindeln bestückt. Als Zentralspindeldrehzahl wurden 110 rpm gewählt.

Die Temperierkreise 1 bis 3 und 7 bis 8 wurden mit Kühlwasser von 18 °C betrieben, die Temperierkreise 4 bis 6 wurden mit 95 °C beheizt. Die Masseaustrittstemperatur wurde zu 99 °C bestimmt.

Alle Komponenten wurden zu einem Premix vorgemischt und in den Füllteil des Planetwalzenextruders kontinuierlich mit einer Rate von 66 kg/h zudosiert.

Die so erhaltene Klebmasse wurde unmittelbar nach dem Herstellprozeßauf einen mittelgekreppten, nach branchenüblichen Verfahren imprägnierten, mit bekannten Release- und Primerschichten ausgerüsteten Papierträger, welcher ein Flächengewicht von 85 g/m² aufwies, mit einer Schichtdicke von 55 µm aufgebracht.

Die Beschichtung der Klebemasse analog Beispiel 4 in einer Arbeitsbreite von 500 mm. Alle Walzen waren auf 113 °C temperiert. Die Beschichtungsgeschwindigkeit betrug 60 m/min.

Die auf dem so erhaltenen Klebeband aufgebrachte Klebmasse wurde nach der Beschichtung durch Elektronenstrahlen gemäß Beispiel 4 vernetzt. Die Strahlendosis betrug 25 kGy.

Das so erhaltene Klebeband wies eine Klebkraft von 4,5-5 N/cm, Scherstandzeiten (10N) von größer 10 000 min, und eine Eignung als Abdeckband mit kurzzeitiger Temperaturbelastbarkeit bis zu 140 °C auf.

### Beispiel 6

Der Kleber des gemäß Beispiel 5 hergestellten Klebebandes wurde nicht mit Elektronenstrahlen, sondern unter Einwirkung von Temperatur chemisch vernetzt.

Die Vernetzung erfolgte in einem Vulkanisationskanal mit effektiver Verweilzeit von 4 min /120 °C.

Die Temperaturbelastbarkeit des so erhaltenen Bandes erhöhte sich auf 160 °C.

### Beispiel 7

Zur Herstellung von Verpackungsband-Prototypen auf Folienbasis diente die folgende Beispielrezeptur C.

| Beispielrezeptur C | | |
|---|---|---|
| C | Komponente | Gewichtsanteil [phr] |
| | SMR L | 100 |
| | Dercolyte S 115 ® | 104 |
| | ASM Lowinox AH 25 ® | 2 |
| | Summe | 206 |

Die oben genannten Komponenten wurden separat über volumetrisch arbeitende Dosiersysteme dem Füllteil des Planetwalzenextruders kontinuierlich zugeführt. Die Verfahrensparameter entsprachen ansonsten Beispiel 4. Die Produktaustrittstemperatur wurde zu 122 °C gemessen.

Die so erhaltene Klebmasse wurde unmittelbar nach dem Herstellprozeß auf eine branchenübliche 30 µm starke BOPP-Folie, welche mit einer branchenüblichen Primerschicht auf Isocyanatbasis und einer branchenüblichen Releaseschicht auf Carbamatbasis versehen ist, mit einer Schichtdicke von 20 µm aufgebracht.

Die aus einem Förderextruder austretende Klebstoffmasse wurde mit Hilfe eines biegesteifen 2-Walzenauftragswerks beschichtet. Die Beschichtung des Klebefilms auf die geprimerte Folienseite erfolgte direkt. Zwischen der ersten und der zweiten bahnführenden Beschichtungswalze wurde gemäß der Auftragsdicke ein Beschichtungsspalt eingestellt. Die erste Walze war auf 100 °C temperiert, die bahnführende Walze auf 90 °C. Die aus dem Förderextruder austretende Klebemasse besaß eine Temperatur von 120 °C. Die Beschichtung erfolgte mit 50 m/min.

Die so erhaltenen Klebebänder weisen eine Klebkraft von 3-4 N/cm, und Scherstandzeiten (20N) von > 10 000 min auf, sie sind als Klebebänder für Verpackungszwecke geeignet.

### Beispiel 8

Zur Herstellung von beidseitig klebenden Bändern auf Folienträgerbasis diente die folgende Beispielrezeptur D.

| Beispielrezeptur D | | |
|---|---|---|
| D | Komponente | Gewichtsanteil [phr] |
| | Kautschuk ADS | 100 |
| | Dercolyte S 115 ® | 104 |
| | Sunpar Oil 2280 ® | 2 |
| | ASM Lowinox AH 25 ® | 2 |
| | Summe | 208 |

Die Masseherstellung erfolgte analog Beispiel 7. Darüber hinaus wurde der flüssige Weichmacher über den Einspritzring vor dem ersten Walzenzylinder mit Hilfe einer Membrankolbenpumpe kontinuierlich zudosiert. Die Produktaustrittstemperatur wurde zu 105 °C gemessen. Die Produktrate betrug 68 kg/h.

Die so erhaltene Klebmasse wurde unmittelbar nach dem Herstellprozeß beidseitig auf eine handelsübliche, 38 µm starke E-PVC Folie mit einer Schichtdicke von 2×40 µm aufgebracht.

Die Beschichtung erfolgte mit Hilfe des Auftragswerkes aus Beispiel 5. Die Klebemasse wurde indirekt im Gegenlauf auf die E-PVC-Folie aufgetragen. Die Beschichtung wurde mit einer Geschwindigkeit von 50 m/min durchgeführt. Die Übertragungswalze wurde mit 85 % der Bahngeschwindigkeit betrieben. Walze 1 und Walze 2 waren mit 100°C beziehungsweise 80°C temperiert. Die bahnführende Walze war auf 30 °C temperiert. Unmittelbar nach der Beschichtung wurde die klebende Seite mit einem doppelseitigen Silikonpapier abgedeckt. Der Verbund wurde dann nach dem gleichen Verfahren wie die erste Seite beschichtet und aufgerollt.

Die so erhaltenen Klebebänder weisen eine Klebkraft von 7,5 N/cm, und Scherstandzeiten (10N) von > 5 000 min auf, sie sind als doppelseitige Klebebänder für verschiedenste Zwecke, so zum Beispiel für die Klischeeverklebung in der Druckindustrie geeignet.

### Beispiel 9

Zur Herstellung eines doppelseitigen Teppichverlegebandes auf Gewebeträgerbasis diente die folgende Beispielrezeptur E.

| Beispielrezeptur E | | |
|---|---|---|
| E | Komponente | Gewichtsanteil [phr] |
| | SMR L | 100 |
| | Escorez 1202 ® | 55 |
| | Dercolyte S 135 ® | 55 |
| | Wingtack 10 ® | 15 |
| | Zinkoxyd Harzsiegel ® | 22 |
| | ASM Lowinox AH 25 ® | 2 |
| | Summe | 247 |

Die Masseherstellung erfolgte mit einer Planetwalzenextruderkonfiguration wie in Beispiel 5 genannt, bei einer Zentralspindeldrehzahl von 95 rpm. Die Anlaufringe nach dem ersten und zweiten Walzenzylinder waren zum Zwecke der Flüssigdosierung mit radialen Bohrungen versehen. Die freien Querschnitte in den Anlaufringen betrugen in diesem Beispiel 46 beziehungsweise 44 mm.

Die Walzenzylinder wurden über die Temperierkreise 4 bis 6 mit 105 °C beheizt, die Temperierkreise 1 bis 3 und 7 bis 8 waren mit Wasser gekühlt, das eine Temperatur von 15 °C hatte.

Die Dosierung der Rezepturkomponenten erfolgte mit Ausnahme der Harze Escorez und Dercolyte über separate volumetrische Dosierer. Von den beiden Harzen wurde vorab im Pulvermischer Premix hergestellt, der dann zudosiert wurde. Das zähflüssige Weichharz Wingtack 10 wurde zur leichteren Dosierbarkeit auf 60 °C vorgewärmt und über eine Rohrleitung mit elektrischer Begleitheizung in den Einspritzring vor dem ersten Walzenzylinder eindosiert. Als Dosierpumpe wurde eine doppelt wirkende Kolbendosierpumpe verwendet, deren Vorratsbehäiter einen beheizten und wärmeisolierten Doppelmantel aufwies, der auf 60°C temperiert war. Die Produktaustrittstemperatur wurde zu 109 °C gemessen. Die Produktrate betrug 65 kg/h.

Die so erhaltene Klebmasse wurde unmittelbar nach dem Herstellprozeß beidseitig auf ein handelsübliches Zellwollgewebe (Fadendichte 19/17) mit einer Schichtdicke von 2 x 120 µm aufgebracht.

Die Herstellung eines doppelseitigen Teppichverlegebandes auf Gewebeträgerbasis erfolgte mit Hilfe der Transferbeschichtung. Ein beidseitig silikonisiertes Trennpapier wurde über das Verfahren aus Beispiel 4 mit 120 µm direkt beschichtet. Über eine Kaschierstation wurde das handelsübliche Zellwollrohgewebe zukaschiert und der Verbund in einem zweiten Arbeitsgang auf die offene Seite ebenfalls direkt mit 120 µm Klebstoffauftrag beschichtet. Die Temperatur der Klebemasse betrug 103 °C. Die Beschichtungswalzen waren auf 90 °C temperiert. Das Zellwollrohgewebe wurde über eine beheizte Kaschierstation zugeführt, wobei die erste Kaschierwalze eine silikonisierte Oberflächenbeschichtung aufwies und die bahnführende zweite Kaschierwalze auf 80 °C temperiert war. Die Beschichtung erfolgte mit einer Geschwindigkeit von 30 m/min.

Die so erhaltenen Klebebänder weisen eine Klebkraft von >7 N/cm, und Scherstandzeiten (10N) von größer 200 min auf, sie sind als doppelseitige Klebebänder für verschiedenste Zwecke, besonders für Teppichverlegearbeiten, geeignet.

### Beispiel 10

Zur Herstellung von Allzweckklebebändern mit verschiedenen Gewebeträgern diente die folgende Beispielrezeptur F.

| Beispielrezeptur F | | |
|---|---|---|
| F | Komponente | Gewichtsanteil [phr] |
| | SMR L | 70 |
| | Cariflex IR 305 ® | 30 |
| | Escorez 1202 ® | 55 |
| | Picco 5120 ® | 55 |
| | Wingtack 10 ® | 50 |
| | Sunpar Oil 2280 ® | 15 |
| | ZnO Harzsiegel ® | 50 |
| | ASM Butyl Zimate ® | 2 |
| | Summe | 325 |

Zur Herstellung dieser Selbstklebemasse wurde der gleiche Versuchsaufbau wie in Beispiel 9 verwendet.

Aus den beiden Festharzen, den beiden pulverförmigen Komponenten und den beiden Elastomeren wurden jeweils Vormischungen hergestellt, die über volumetrisch arbeitende Dosiergeräte separat in den Füllteil des Planetwalzenextruders zugegeben wurden. Das Weichmacheröl wurde mit Hilfe einer Membrankolbenpumpe über den Einspritzring vor dem ersten Walzenzylinder, das auf 60 °C vorgewärmte Weichharz über den Anlaufring nach dem ersten Walzenzylinder mittels einer doppelt wirkenden Kolbendosierpumpe zugegeben. Die Dosierung aller Komponenten erfolgte so, daß eine Produktrate von 62 kg/h erhalten wurde. Die Produktaustrittstemperatur wurde zu 105 °C gemessen.

Die so erhaltene Klebmasse wurde auf ein Polyester-/Baumwoll-Mischgewebe mit einer Fadendichte 22/10 mit zulaminierter 80 µm Polyethylenschicht. welche rückseitig mit einem branchenüblichen Carbamat-Release-Lack ausgerüstet ist, mit einer Schichtdicke von 120 µm aufgebracht.

Die Herstellung von Allzweckgewebebändern erfolgte nach dem Verfahren aus Beispiel 4. Anstelle der Papierträgerbahn wurde hier das Polyester/Baumwoll-Mischgewebe und die Polyethylenfolie über die Anlegewalze geführt und auf das Polyester/Baumwoll-Mischgewebe die über den Walzenbeschichtungskalander ausgeformte 120 µm dicke Klebstoffschicht beschichtet. Die Beschichtung erfolgte mit 155 m/min in einer Arbeitsbreite von 1200 mm. Die Beschichtungswalzen wurden im Verhältnis von 6:1 betrieben.
Das so hergestellte Band hat eine Klebkraft von >5 N/cm, und ist als Allzwecklebeband für verschiedenste Zwecke geeignet.

### Beispiel 11

Eine Klebemasse nach Beispielrezeptur G wurde hergestellt.

| Beispielrezeptur G | | |
|---|---|---|
| G | Komponente | Gewichtsanteil [phr] |
| | SMR L | 100 |
| | Stearinsäure | 1,1 |
| | Escorez 1202 ® | 55 |
| | Dercolyte S 135 ® | 55 |
| | Wingtack 10 ® | 15 |
| | Zinkoxyd aktiv ® | 22 |
| | ASM Lowinox AH 25 ® | 2 |
| | Rhenogran S 80 ® | 4,4 |
| | Rhenogran ZEPC 80 ® | 4,4 |
| | Rhenocure HX ® | 0,6 |
| | Summe | 259,5 |

Die Masseherstellung erfolgte in einem Planetwalzenextruder gemäß Figur 1 mit drei Walzenzylindern und einer Bestückung an Planetenspindeln wie in Beispiel 5. Die Drehzahl der Zentralspindel wurde auf 100 rpm eingestellt.

Zu Herstellung der thermischen Vernetzer enthaltenen Selbstklebemasse wurden die Temperierkreise 1 bis 3 und 7 bis 8 mit Kühlwasser von 16 °C betrieben, während die Temperierkreise 4 bis 5 mit 110 °C und der Temperierkreis 6 mit 95 °C beheizt wurden. Mit diesem Temperaturregime wurde eine Masseaustrittstemperatur von 98 °C erhalten.

Alle Festkomponenten wurden zu einem dosierfähigen Premix vorgemischt und in den Füllteil des Planetwalzenextruders kontinuierlich eindosiert. Das Flüssigharz Wingtack 10 wurde analog Beispiel 9 mittels Kolbendosierpumpe vorgewärmt zugegeben. Um die Verweilzeit des thermischen Vernetzers Rhenocure HX bei höheren Temperaturen möglichst kurz zu halten, wurde dieser über den zweiten Anlaufring, also vor dem dritten Walzenzylinder kontinuierlich mittels Schlauchpumpe zudosiert. In diesem Beispiel wurde mit einer Produktrate von 75 kg/h gefahren.

Die so erhaltene Klebmasse wurde unmittelbar nach dem Herstellprozeß auf ein übliches Trennpapier mit beidseitiger Releasebeschichtung aufgebracht, und zwar mit einer Schichtdicke von 1000 µm.

Das beidseitig silikonisierte Trennpapier wurde über das Verfahren aus Beispiel PACK mit 1000 µm direkt beschichtet. Die Beschichtung erfolgte mit einer Geschwindigkeit von 30 m/min.

Anschließend wurde die Vernetzung in einem Vulkanisationskanal mit effektiver Verweilzeit von 4 min / 80 °C durchgeführt .

Das so erhaltene beschichtete Trennpapier stellt ein vielseitig verwendbares doppelseitiges Klebeband dar. Es kann beispielsweise als Montierhilfe, zur selbstklebenden Ausrüstung von Fügeteilen oder Profilen sowie zum Transfer der Klebeschicht auf andere Träger benutzt werden.

### Beispiel 12

Die Herstellung eines doppelseitigen Teppichverlegebandes auf Gewebeträgerbasis erfolgte mit der Beispielrezeptur H.

| Beispielrezeptur H | | |
|---|---|---|
| H | Komponente | Gewichtsanteil [phr] |
| | Kautschuk ADS | 100,0 |
| | Hercurez C | 54,9 |
| | Escorez 1202 | 41,4 |
| | Plasticizer Nipol | 17,5 |
| | Zinkoxyd aktiv | 7,5 |
| | Silitin Z 86 | 24,7 |
| | Stearinsäure | 1,0 |
| | ASM Lowinox AH 25 | 2,5 |
| | Summe | 249,5 |

Die Herstellung der Selbstklebemasse erfolgte in einem Planetwalzenextruder gemäß Figur 1 mit drei Walzenzylindern und einer Bestückung an Planetenspindeln wie in Beispiel 5 genannt. Der Planetwalzenextruder wurde mit einer Zentralspindeldrehzahl von 110 rpm betrieben.

Die Temperierkreise 1 bis 3 und sowie Temperierkreis 8 wurden mit Kühlwasser von 16 °C betrieben. Die Temperierkreise 4 bis 5 wurden mit 120 °C und die Temperierkreise 6 bis 7 mit 100 °C beheizt. Dabei wurde eine Massetemperatur am Ausgang des Planetwalzenextruders von 112 °C erhalten.

Analog Beispiel 11 wurden alle Festkomponenten zu einem dosierfähigen Premix vorgemischt, der in die Füllöffnung des Planetwalzenextruders eindosiert wurde. Der zähflüssige Plasticizer Nipol wurde zur leichteren Dosierbarkeit auf 75 °C vorgewärmt und über den Anlaufring vor dem zweiten Walzenzylinder mit Hilfe der doppelt wirkenden Kolbendosierpumpe aus Beispiel 9 zugegeben. Die eingestellte Produktrate betrug 81 kg/h.

Die Klebmasse wurde mit Hilfe der Transferbeschichtung beidseitig auf einen handelsüblichen Schaumstoff auf Polyethylenbasis mit einer Dicke von 1000 µm und einem Raumgewicht von 95 kg/m³ mit einer Schichtdicke von 2×55 g/m² aufgebracht.

Die Herstellung eines doppelseitigen Teppichverlegebandes auf Gewebeträgerbasis erfolgte. Ein beidseitig silikonisiertes Trennpapier wurde über das Verfahren aus Beispiel 8 mit 55 µm direkt beschichtet. Über eine Kaschierstation wird der PE-Schaumstoff zukaschiert und der Verbund in einem zweiten Arbeitsgang auf die offene Seite ebenfalls direkt mit 55 µm Klebstoffauftrag beschichtet. Die Temperatur der Klebemasse betrug 100 °C. Die Beschichtungswalzen waren auf 90 °C temperiert. Der PE-Schaumstoff wurde über eine beheizte Kaschierstation zugeführt, wobei die erste Kaschierwalze eine silikonisierte Oberflächenbeschichtung aufwies und die bahnführende zweite Kaschierwalze auf 80 °C temperiert war. Die Beschichtung erfolgte mit einer Geschwindigkeit von 30 m/min.

Die so erhaltenen Klebebänder weisen eine Klebkraft von >3,5 N/cm, und Scherstandzeiten (10N) von > 250 min auf, sie sind als doppelseitige Klebebänder mit toleranzausgleichenden und dämpfenden Eigenschaften für verschiedenste Zwecke geeignet.

## Patentansprüche

1. Verfahren zur kontinuierlichen lösungsmittelfreien und mastikationsfreien Herstellung von Selbstklebemassen (14) auf Basis von nicht-thermoplastischen Elastomeren in einem kontinuierlich arbeitenden Aggregat mit einem Füll- (2) und einem Compoundierteil (5), wobei das Aggregat ein Planetwalzenextruder (21) ist, dessen Compoundierteil (5) vorzugsweise zumindest aus zwei, besonders bevorzugt aber aus drei gekoppelten Walzenzylindem (5a-5c) besteht, bestehend aus
a) Aufgabe der Festkomponenten der Selbstklebemasse (14) wie Elastomere und Harze in den Füllteil (2) des Aggregats, gegebenenfalls Aufgabe von Füllstoffen, Farbstoffen und/oder Vernetzern,
b) Übergabe der Festkomponenten der Selbstklebemasse (14) aus dem Füllteil (2) in den Compoundierteil (5),
c) Zugabe der Flüssigkomponenten der Selbstklebemasse (14) wie Weichmacher, Vernetzer und/oder weiterer klebrig machender Harze in den Compoundierteil (5),
d) Herstellung einer homogenen Selbstklebemasse (14) im Compoundierteil (5) und
e) Austragen der Selbstklebemasse (14), wobei die Selbstklebemasse (14) auf ein bahnförmiges Material (15) beschichtet wird und die Beschichtung des bahnförmigen Materials (15) mit einem Walz- oder Kalanderwerk (24, 25, 26, 27) erfolgt, wobei die Selbstklebemasse (14) bei Durchgang durch einen oder mehrere Walzenspalte vor Übergabe auf das bahnförmige Material (15) auf die gewünschte Dicke geformt wird.

2. Verfahren nach Anspruch 1, **dadurch gekennzeichnet, dass** jeder Walzenzylinder (5a-5c) des Planetwalzenextruders (21) mindestens die Hälfte, vorzugsweise mehr als ¾ der möglichen Anzahl an Planetenspindeln (7) enthält.

3. Verfahren nach den Ansprüchen 1 oder 2, **dadurch gekennzeichnet, dass** die Selbstklebemasse (14) nach dem Austragen aus dem Aggregat unter dem Einfluss von Vakuum von Gasblasen befreit wird.

4. Verfahren nach Anspruch 1, **dadurch gekennzeichnet, dass** zwischen Aggregat und Beschichtungsvorrichtung eine Schmelzepumpe oder ein Extruder zur Klebmasseförderung, insbesondere ein Entgasungsextruder (23), angeordnet ist, der drehzahl- oder druckgeregelt, vorzugsweise druckgeregelt betrieben wird.

5. Verfahren nach den Ansprüchen 1 bis 4, **dadurch gekennzeichnet, dass** das beschichtete Material (30) in einem der Beschichtung nachfolgenden Schritt vernetzt wird.

6. Verfahren nach Anspruch 5, **dadurch gekennzeichnet, dass** das beschichtete Material (30) ohne Promotoren mittels Elektronenstrahlen vernetzt wird.

7. Verfahren nach Anspruch 5, **dadurch gekennzeichnet, dass** das beschichtete Material (30) thermisch vernetzt wird.

8. Verfahren nach den Ansprüchen 1 bis 7, **dadurch gekennzeichnet, dass** die Selbstklebemasse (14) am Austritt aus dem Aggregat eine Temperatur aufweist von weniger als 150 °C, vorzugsweise weniger als 130 °C, besonders bevorzugt zwischen 70 °C und 110 °C.

9. Verfahren nach mindestens einem der vorhergehenden Ansprüche, **dadurch gekennzeichnet, dass** die nicht-thermoplastischen Elastomere ausgewählt sind aus der Gruppe der Naturkautschuke, der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) der Polyolefine, und der Polyurethane und/oder deren Blends.

10. Verfahren nach mindestens einem der vorhergehenden Ansprüche, **dadurch gekennzeichnet, dass** den nicht-thermoplastischen Elastomeren thermoplastische Elastomere mit einem Gewichtsanteil von 10 bis 50 Gew.-% zugegeben werden.

11. Verfahren nach mindestens einem der vorhergehenden Ansprüche, **dadurch gekennzeichnet, dass** die Vernetzer aus der Gruppe der Schwefel-, der beschleunigten Schwefel-, der reaktiven Phenolharz- oder Diisocyanatvernetzungssysteme ausgewählt werden.

12. Verfahren nach mindestens einem der vorhergehenden Ansprüche, **dadurch gekennzeichnet, dass** die Vernetzer thermisch aktivierbar sind und vorzugsweise aktiviert werden bei Temperaturen über 50 °C, bevorzugt bei Temperaturen von 100 °C bis 160 °C, ganz besonders bevorzugt bei Temperaturen von 110 °C bis 140 °C.

## Claims

1. Process for the continuous solvent-free and mastication-free production of self-adhesive compositions (14) based on non-thermoplastic elastomers in a continuously operating apparatus having a filling section (2) and a compounding section (5), the apparatus being a planetary roll extruder (21) whose compounding section (5) consists preferably of at least two, but with particular preference three, coupled roll cylinders (5a-5c),
comprising
a) feeding the solid components of the self-adhesive composition (14), such as elastomers and resins, into the filling section (2) of the apparatus,
optionally feeding of fillers, colorants and/or crosslinkers,
b) transferring the solid components of the self-adhesive composition (14) from the filling section (2) to the compounding section (5),
c) adding the liquid components of the self-adhesive composition (14), such as plasticizers, crosslinkers and/or further tackifier resins, to the compounding section (5),
d) preparing a homogeneous self-adhesive composition (14) in the compounding section (5), and
e) discharging the self-adhesive composition (14), the self-adhesive composition (14) being coated onto a material (15) in web form and the coating of the web-form material (15) taking place with a roll mill or calender unit (24,25,26,27), the self-adhesive composition (14) being shaped to the desired thickness as it passes through one or more roll nips prior to transfer to the web-form material (15).

2. Process according to Claim 1, **characterized in that** each roll cylinder (5a-5c) of the planetary roll extruder (21) contains at least half, preferably more than ¾, of the possible number of planetary spindles (7).

3. Process according to Claim 1 or 2, **characterized in that** following its discharge from the apparatus the self-adhesive composition (14) is freed from gas bubbles under the effect of reduced pressure.

4. Process according to Claim 1, **characterized in that** a melt pump or an extruder for conveying adhesive composition, especially a devolatizing extruder (23), which is operated with rotational speed regulation or pressure regulation, preferably with pressure regulation, is arranged between the apparatus and the coating device.

5. Process according to Claims 1 to 4, **characterized in that** the coated material (30) is crosslinked in a step subsequent to coating.

6. Process according to Claim 5, **characterized in that** the coated material (30) is crosslinked by means of electron beams without promoters.

7. Process according to Claim 5, **characterized in that** the coated material (30) is thermally crosslinked.

8. Process according to Claims 1 to 7, **characterized in that** at the exit from the apparatus the self-adhesive composition (14) has a temperature of less than 150°C, preferably less than 130°C and, with particular preference, between 70°C and 110°C.

9. Process according to at least one of the preceding claims, **characterized in that** the non-thermoplastic elastomers are selected from the group consisting of natural rubbers, randomly copolymerized styrenebutadiene rubbers (SBR), butadiene rubbers (BR), synthetic polyisoprenes (IR), butyl rubbers (IIR), halogenated butyl rubbers (XIIR), acrylate rubbers (ACM), ethylene vinyl acetate copolymers (EVA), polyolefins, polyurethanes and/or blends thereof.

10. Process according to at least one of the preceding claims, **characterized in that** thermoplastic elastomers are added with a weight fraction of from 10 to 50% by weight to the non-thermoplastic elastomers.

11. Process according to at least one of the preceding claims, **characterized in that** the crosslinkers are selected from the group consisting of sulphur systems, accelerated sulphur systems, reactive phenolic resin systems and diisocyanate crosslinking systems.

12. Process according to at least one of the preceding claims, **characterized in that** the crosslinkers are heat-activatable and are preferably activated at temperatures above 50°C, preferably at temperatures of from 100°C to 160°C and, with very particular preference, at temperatures from 110°C to 140°C.

## Revendications

1. Procédé pour la préparation continue, sans solvant ni mastication, de masses autoadhésives (14) à base d'élastomères non thermoplastiques dans un appareil fonctionnant en continu avec une partie de remplissage (2) et une partie de compoundage (5), l'appareil étant une extrudeuse à cylindres planétaires (21), dont la partie de compoundage (5) est de préférence constituée par au moins deux, de manière particulièrement préférée cependant par trois cylindres de laminage couplés (5a-5c), constitué par
a) introduction des composants solides de la masse autoadhésive (14) tels que des élastomères et des résines dans la partie de remplissage (2) de l'appareil,
le cas échéant introduction de charges, colorants et/ou réticulants,
b) transfert des composants solides de la masse autoadhésive (14) de la partie de remplissage (2) dans la partie de compoundage (5),
c) addition des composants liquides de la masse autoadhésive (14) tels que les plastifiants, les réticulants et/ou d'autres résines rendant adhésif dans la partie de compoundage (5),
d) préparation d'une masse autoadhésive homogène (14) dans la partie de compoundage (5) et
e) évacuation de la masse autoadhésive (14), où la masse autoadhésive (14) est revêtue sur un matériau en forme de bande (15) et le revêtement du matériau en forme de bande (15) est réalisé avec un laminoir ou une calandreuse (24, 25, 26, 27), la masse autoadhésive (14) étant façonnée à l'épaisseur souhaitée lors du passage dans une ou plusieurs fentes de laminage avant le transfert sur le matériau en forme de bande (15).

2. Procédé selon la revendication 1, **caractérisé en ce que** chaque cylindre de laminage (5a-5c) de l'extrudeuse à cylindres planétaires (21) contient au moins la moitié, de préférence plus de ¾ du nombre possible d'axes planétaires (7).

3. Procédé selon les revendications 1 ou 2, **caractérisé en ce que** la masse autoadhésive (14) est libérée des bulles de gaz après l'évacuation de l'appareil sous l'influence du vide.

4. Procédé selon la revendication 1, **caractérisé en ce qu'**entre l'appareil et le dispositif de revêtement est disposée une pompe à masse fondue ou une extrudeuse pour le transport de la masse adhésive, en particulier une extrudeuse de dégazage (23), qui est exploitée avec une régulation de la vitesse de rotation ou de la pression, de préférence de la pression.

5. Procédé selon les revendications 1 à 4, **caractérisé en ce que** le matériau revêtu (30) est réticulé dans une étape consécutive au revêtement.

6. Procédé selon la revendication 5, **caractérisé en ce que** le matériau revêtu (30) est réticulé sans promoteurs au moyen de rayons électroniques.

7. Procédé selon la revendication 5, **caractérisé en ce que** le matériau revêtu (30) est réticulé thermiquement.

8. Procédé selon les revendications 1 à 7, **caractérisé en ce que** la masse autoadhésive (14) présente, à la sortie de l'appareil, une température inférieure à 150°C, de préférence inférieure à 130°C, de manière particulièrement préférée entre 70°C et 110°C.

9. Procédé selon au moins l'une quelconque des revendications précédentes, **caractérisé en ce que** les élastomères non thermoplastiques sont choisis dans le groupe des caoutchoucs naturels, des caoutchoucs de styrène-butadiène copolymérisés statistiquement (SBR), des caoutchoucs de butadiène (BR), des polyisoprènes synthétiques (IR), des caoutchoucs de butyle (IIR), des caoutchoucs de butyle halogénés (XIIR), des caoutchoucs d'acrylate (ACM), des copolymères d'éthylène-acétate de vinyle (EVA), des polyoléfines et des polyuréthanes et/ou de leurs mélanges.

10. Procédé selon au moins l'une quelconque des revendications précédentes, **caractérisé en ce qu'**on ajoute aux élastomères non thermoplastiques des élastomères thermoplastiques présentant une proportion pondérale de 10 à 50% en poids.

11. Procédé selon au moins l'une quelconque des revendications précédentes, **caractérisé en ce que** les réticulants sont choisis dans le groupe des systèmes de réticulation à base de soufre, des systèmes de réticulation accélérés à base de soufre, des systèmes de réticulation à base de résine phénolique réactive ou des systèmes de réticulation à base de diisocyanate.

12. Procédé selon au moins l'une quelconque des revendications précédentes, **caractérisé en ce que** les réticulants sont activables par voie thermique et de préférence activés à des températures supérieures à 50°C, de préférence à des températures de 100°C à 160°C, de manière tout particulièrement préférée à des températures de 110°C à 140°C.
